(19) Europäisches Patentamt

European Patent Office

Office européen des brevets

(11) **EP 0 788 070 A2**

(12) **EUROPEAN PATENT APPLICATION**

(43) Date of publication:
06.08.1997 Bulletin 1997/32

(51) Int. Cl.⁶: **G06T 5/20**

(21) Application number: 97200119.2

(22) Date of filing: 15.01.1997

(84) Designated Contracting States:
DE FR GB

(30) Priority: 31.01.1996 US 594186

(71) Applicant: **EASTMAN KODAK COMPANY**
(a New Jersey corporation)
Rochester, New York 14650 (US)

(72) Inventors:
• **Johnson, Stephen Edward,**
c/o Eastman Kodak Company
Rochester, New York 14650-2201 (US)

• **Kaplan, Martin Charles,**
c/o Eastman Kodak Company
Rochester, New York 14650-2201 (US)
• **Milch, James Roger,**
c/o Eastman Kodak Company
Rochester, New York 14650-2201 (US)
• **Pridham, Brian Todd**
c/o Eastman Kodak Company
Rochester, New York 14650-2201 (US)

(74) Representative: **Wagner, Karl H., Dipl.-Ing. et al**
**WAGNER & GEYER**
**Patentanwälte**
**Gewürzmühlstrasse 5**
**80538 München (DE)**

(54) **Method for forming a digital sharpening/blurring filter**

(57)    A method for forming a digital sharpening/blurring filter, for use in an image processing work station, incorporating MTF functions derived from the image processing chain, comprising the steps of:

a) enabling an image processing work station operator to select a filter control value from a plurality of filter control values that relate to human sharpness perception values;
b) estimating the MTF function of the image processing chain; and
c) forming a digital sharpening/blurring filter, which when introduced into the image processing chain, changes the overall MTF function in accordance with the selected filter control value so as to implement the operator selected change in sharpness.

FIG. 2

## Description

### Cross-Reference to Related Applications

The present application is related to U.S. Application Serial Number 08/576,738, filed December 21, 1995, by Kenneth A. Parulski, et al., and entitled, "Automatic Image Sharpening In An Electronic Imaging System."

### FIELD OF THE INVENTION

The invention relates generally to the field of digital image processing, and in particular to an improved digital filtering technique for sharpening and/or blurring digital images.

### BACKGROUND OF THE INVENTION

Digital image filtering refers to the application of a spatial filter to an image. The effect on the image is controlled by the shape of the filter in Fourier space. If the filter accentuates high spatial frequencies, a sharpening effect results. If the filter reduces the high frequency content, a blurring effect is obtained. The filter is a function, not a single number. We may speak sometimes of the "degree of sharpening" or "degree of blurring," but there is no general, single-number correlate of these terms.

The overall spatial frequency response of a system or component is described by the Modulation Transfer Function (MTF) of the system or component. The incorporation of a digital filter into a system has the effect of modifying the overall MTF of the system.

The shape (response) of the filter should depend on the purpose of the sharpening operation. Often, sharpening is done to correct for blurring introduced into the image by a scanner or a printer. In this case, the proper filter shape can be calculated from the effective blurring of the scanner or printer.

In many desktop applications, the source of the blurring and the details of the blurring filter are unknown. The customer simply wishes to "make the image sharper." The degree of sharpening is usually a wild guess. The purpose of the sharpening may be to correct for a poor image capture or simply for "artistic effect."

Customers have clearly indicated their desire for a knob in image-editing applications to control sharpness, despite the logistical problems in using such a control. It has been difficult to provide the customer with an on-screen preview of his image which accurately presents its degree of sharpness. It is easy for the customer to specify too much sharpening and regret it when the image is printed.

The challenge, therefore, is to create a family of filter functions described by a single variable, which meet a specific set of needs that is implementable on a digital image processing system.

The creation of a filter is a particular problem in a multi-resolution system with deferred rendering such as a Photo-CD system. In such a system, the image is stored at several resolution levels, generally differing by factors of two. The customer does not need to be aware of the resolution level being used for any editing, presentation, or printing operation -- this is managed by the software. In many applications the user interface will present to the customer a view of his image based on one resolution level and allow the specification of a level of sharpening or blurring. The problem is that the image may be modified or printed using a different resolution level, and the filtering must carry over in a simple manner.

The phrase "deferred rendering" refers to a method of image modification in which customer-defined changes are not applied to the image data immediately, but rather are stored in a script, log, or as viewing parameters. These changes are associated with the original image data. When the image is displayed or printed, the rendering engine applies the changes. This method has value if the original image data is stored on a write-once medium or a network server far away, or if extensive undo is desired.

Finally, the selection of a filter is made more complex if the image is part of a composite image. A composite image consists of a set of subimages, each of which can be a composite itself. It is not uncommon to associate a first sharpness increase to an image and a second sharpness increase to the composite image which contains the first image. A specification of sharpening should behave well under these circumstances. It would be advantageous to have a means for combining the sharpening methodologies so that they can be applied once to the subimage in question. This applies to blurring operations and to a combination of sharpening and blurring.

A method for forming filters in the target environment should have the following characteristics:

1. It should be controlled by a single control value which has a monotonic and predictable effect on the perception of sharpness.
2. It should be relatively fool proof and produce images free of artifacts.
3. It should also be designed so that applying a first filter control value, for example, a value of s1, and a second filter control value s2, should produce the same effect as a single filter control value s1+s2.

4. For a given filter control value it should be easy to form an appropriate filter for any resolution of a multi-resolution image.

5. It should enable the customer to get meaningful sharpening or blurring on the lower resolutions of a multiresolution image.

## SUMMARY OF THE INVENTION

The present invention is directed to overcoming one or more of the problems set forth above. Briefly summarized, according to one aspect of the present invention there is provided a method for forming a digital sharpening/blurring filter, for use in an image processing work station, incorporating MTF functions derived from the image processing chain, comprising the steps of:

a) enabling an image processing work station operator to select a filter control value from a plurality of filter control values that relate to human sharpness perception values;

b) estimating the MTF of the image processing chain; and

c) forming a digital sharpening/blurring filter, which when introduced into the image processing chain, changes the overall MTF in accordance with the selected filter control value so as to implement the operator selected change in sharpness.

This invention pertains to a system in which a digital image is stored as a multiresolution (hierarchical) structure, and in which modifications to the image are stored in a script or parameter list. This invention provides a means for the user to specify a degree of image sharpening or blurring, in such a manner that the result is independent of which resolution layer is actually used to render the final image. The invention uses changes in system acutance as a measure of sharpening or blurring. A digital filter is created which produces the desired amount of change. The coefficients of the digital filter depend on the resolution layer being used and external parameters which characterize the imaging system. This method provides additional features in an environment where images are composited and edited.

The invention will also find application in a system in which a digital image is stored at a single resolution, but in which the image is resized by the workstation to more than one resolution in the course of image presentation or printing.

These and other aspects, objects, features, and advantages of the present invention will be more clearly understood and appreciated from a review of the following detailed description of the preferred embodiments and appended claims, and by reference to the accompanying drawings.

## Advantageous Effect Of The Invention

The present invention has the advantage of providing a robust means to specify the degree of sharpening or blurring, so that the result can be obtained from any level of resolution hierarchy. It permits sequential operations to be telescoped down to a single operation without loss of accuracy. The method described in the invention requires some knowledge of the nature of the imaging system, from input to the human observer.

## BRIEF DESCRIPTION OF THE DRAWINGS

Fig. 1 is a block diagram of a system on which the present invention is implemented;

Fig. 2 is a process flow diagram illustrating the preferred steps of the present method; and

Fig. 3 is a process flow diagram illustrating in detail the steps used in the calculation of the digital filter block 20 of Fig. 2.

Fig. 4A and 4B illustrate the degradation of a signal by film, and the frequency response of a convolution kernel affecting the frequency content of a digital image, respectively, both being represented by MTF.

Fig. 5 is a graph illustrating aim frequency response from which a convolution kernel can be calculated.

## DETAILED DESCRIPTION OF THE INVENTION

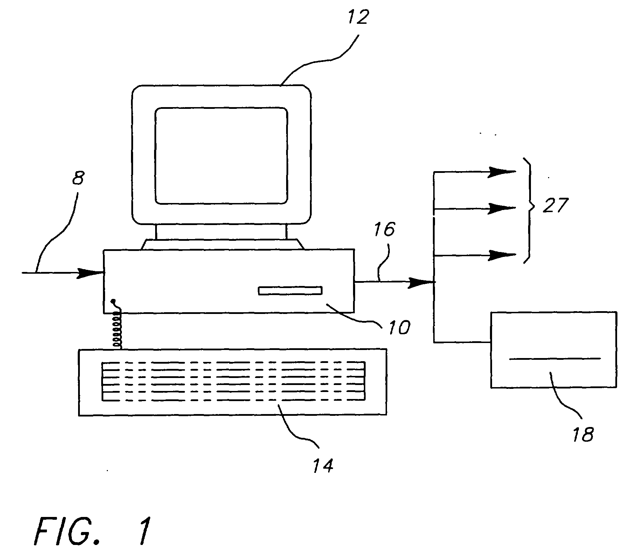

Referring to Fig. 1, the preferred system platform for the present invention is an image processing workstation for editing, composition and printing of digital images. The system is comprised of a central processing unit (CPU) 10 which is adapted to receive digital image data 8 from any source such as a digital camera, scanner, or repository of digital image data. The digital data 8 is displayable as an image on a monitor 12 with the system providing the user (operator) with a means, such as a keyboard 14, for interfacing with the CPU 10. Sharpening and blurring of the displayed image controlled, for example, by keyboard input, mouse input, or other input that performs the same function. Modifications to the digital image data result in a modified digital image file 16 that in turn may be used by a printer 18 for printing a hard copy of the modified image or the file may be stored or transmitted to remote sites 27 for further use.

The image processing workstation may execute changes in the image under the interactive control of an operator, or it may execute a programmed set of imaging operations on one or more images with relatively little operator input.

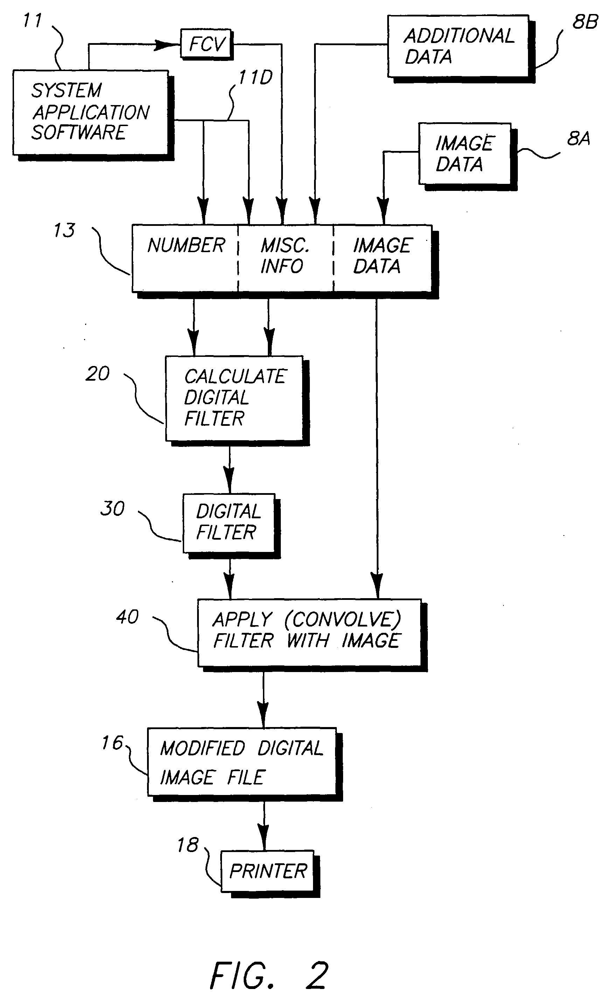

Referring now to Fig. 2, the incoming digital image data 8 is partitioned to have an image data segment 8A, and a segment of additional data 8B, describing the circumstance under which the image was captured. A system application software 11 provides the filter control value (FCV) and other information 11D as to the intended use of the image, based on the characteristics of the printer 18 and the user's input. In almost all system configurations the number of pixels that the printer 18 desires to perform its printing function is different from the number of pixels available from any of the image data available in the image data segment 8A. In particular, among the other information in 11D the application software 11 provides the number of pixels desired by the printer 18 and the layer of the hierarchy to be used for forming the output image. The data from the application software 11 along with data 8A and 8B are buffered in buffer 13 for future use.

The filter control value, FCV, and the additional data 8B, and the other information 11D, as to intended use, are inputs to the process 20 for calculating (forming) the digital filter 30. The resultant digital filter 30 and the image data segment 8A are convolved in operation 40 to form the modified digital image file 16. Once derived, the filter control value FCV can be stored, transmitted and/or used as the input to the system of Fig. 1, or any other implementing system independent of or in conjunction with the image file from which it was derived.

An idealized approach will now be described for forming the digital filter 30 of the present invention. It is desirable that the filter control value should correlate well with changes in sharpness as perceived by the human eye. Single-number metrics for sharpness, generally known as acutance, have been well studied (Rangayyan, Elkadiki). Acutance is a positive-definite measure of the capability of a system to reproduce sharpness. Acutance can be computed from objective measures of system spatial response. It is usually defined so that equal changes in acutance produce equal changes in the human perception of sharpness, at all levels of sharpness. A change of one unit in acutance corresponds to a just-noticeable-differenc in sharpness. By using an acutance metric as the filter control value, the result of the sharpening or blurring operation will be predictable and will be independent of the resolution layer from which the final image data are calculated. A particular form of acutance, AMT acutance as defined by Edward M. Crane, "Acutance And Granulance" pages 125-132, SPIE Vol. 310, Image Quality (1981), will be used in the preferred embodiment of this invention. An efficient implementation, utilizing Gaussian techniques, will then be described in detail. The calculations set forth below are done in the spatial frequency domain. The spatial frequency s is given in cycles/pixel of the relevant digital data. This variable s runs from 0 to 0.5, the Nyquist limit.

For clarity, the implementation will generally be described in terms of one-dimensional functions and analysis. It is understood that digital image processing operations are implemented in two dimensions. The one-dimensional operators may be used in sequence, once in the vertical dimension and a second time in the horizontal directon; or they may be combined via an outer product into a single two-dimensional operator.

The following information is required as input to the process 20 to form the digital filter 30:

1. The composite MTF values of all of the imaging elements used in the formation of the digital data 8A. This composite MTF will be called $MTF_c(s)$. Where s is stated in terms of the highest resolution data

2. The smoothing filter MTF values used to prefilter each layer before subsampling. This smoothing filter MTF will be called $MTF_d(s)$. The s is stated in terms of the resolution layer being filtered and decimated.

3. The resampling filter MTF values used to generate the desired number of pixels at the output (which usually falls between the levels in the hierarchy). The resampling filter MTF will be called $MTF_r(s)$. The s is stated in terms of the resolution level in the hierarchy being resampled. This MTF depends on the resampling factor and the complexity of the filter.

4. The output MTF values of the printer and its media. This output MTF will be called, $MTF_p(s)$. The s is stated in terms of the data requested for printing (or display, in which case $MTF_p(s)$ is the monitor MTF).

5. The visual MTF values of the human eye. This visual MTF will be called $MTF_e(s)$. In this case only, the spatial frequency s is stated in cycles/degree for the viewing conditions of the observer.

6. The size of the output pixel as seen by the observer. This is best expressed as the angle $\phi$ which is the angle subtended by one pixel at a typical observer's position.

Additional definitions are also needed prior to the computation of the system's total $MTF_t$. An index k counts the resolution levels of the hierarchy with k=0 denoting the highest resolution level. $N_k$ is a one dimensional count (height) of the number of pixels in level k. $N_p$ is a one dimensional count (height) of the number of pixels requested for forming the printed output.

The system's total MTF, stated in terms of s for the resolution level k, is:

$$MTF_t(s) = MTF_c(s/2^k) \cdot MTF_d(s) \cdot MTF_r(s) \cdot MTF_p(sN_k/N_p) \cdot MTF_e(sN_k/(N_p\emptyset)) \qquad \text{(Eq. 1)}$$

$MTF_t(s)$ is the system MTF without the application of digital filter 30. The filter control value FCV, is the change in acutance $\Delta A$ that the user has selected. By this method a digital filter 30 with MTF values equal to $MTF_f(s)$ is calculated and applied to the data of resolution level k. The total system MTF is then

$$MTF_t \cdot MTF_f \qquad \text{(Eq. 2)}$$

Acutance is defined in terms of the system MTF as taught by the publication by Crane and as set forth below:

$$AMT = A + B \cdot \log_{10} \frac{\int MTF_t(s)ds}{\int MTF_e(s)ds} \qquad \text{(Eq. 3)}$$

A and B are constants that are defined in Crane's publication.
After the application of the digital filter 30 the acutance will be:

$$AMT = A + B \cdot \log_{10} \frac{\int MTF_t(s) \cdot MTF_f(s)ds}{\int MTF_e(s)ds} \qquad \text{(Eq. 4)}$$

Therefore the change of acutance $\Delta A$ will be given by

$$\Delta A = B \cdot \log_{10} \frac{\int MTF_t(s) \cdot MTF_f(s)ds}{\int MTF_t(s)ds} \qquad \text{(Eq. 5)}$$

The present technique relies upon knowing $MTF_t$ and adjusting $MTF_f$, so that $\Delta A$ equals the customer requested value. Having calculated $MTF_f$ a spatial digital filter 30 corresponding to $MTF_f$ is formed and applied to the image data 8A.

The implementation described above has two weaknesses. First, it requires detailed MTF data regarding each component of the system, which data is generally not available. Second, it requires real time calculations of integrals and digital filters.

The preferred implementation avoids these problems by assuming that all of the MTF functions previously set forth are Gaussian functions of various widths and by building the sharpening and blurring filters out of Gaussian functions. As a result all integrals and filter calculations can be done by experts and the results stored.

The following form for a Gaussian is used hereinafter:

$$e^{-zs^2},$$

where z is a constant. The term z controls the width of the Gaussian and has dimensions of pixels-squared.

Each of the MTF functions input to block 20 will be approximated by a Gaussian function. In particular, recalling that the spatial frequency $\sigma$ is stated in terms of the resolution layer k:

$$MTF_c(s) = e^{-c\sigma^2},$$

Where $\sigma$ is stated in terms of the highest resolution data and $\sigma = s/2^k$

$$MTF_d(s) = e^{-d\sigma^2},$$

Where $\sigma$ is stated in terms of the resolution layer being filtered. The relationship between $\sigma$ and s depends upon the choice of filter layer k. For the highest layer k = 0, no decimation takes place, so $MTF_d(s) = 1$. For all other layers it is an acceptable approximation that $\sigma = s/2$. This relationship can be expressed simply using the function z(k), which is defined to be 0 for k = 0 and 1 for all other values of k. For this reason $\sigma = z(k)s/2$.

$$MTF_r(s) = e^{-r\sigma^2},$$

Where $\sigma = s$

$$MTF_p(s) = e^{-p\sigma^2},$$

Where $\sigma$ is stated in terms of the data requested by the printer and $\sigma = (N_k/N_p)s$.

$$MTF_e(s) = e^{-y\sigma^2},$$

Where $\sigma$ is stated in terms of the angular spatial frequency at the eye of the observer. The relationship between $\sigma$ and s is governed by the size of the image and the distance at which it is viewed. Empirically it has been determined that a viewing distance corresponding to three times the height of the generated image is most often used. Such being the case $\sigma = 3N_k s$.

Where c, d, r, and p, are values which describe the characteristics of the system. Where y is a measured characteristic of the human eye and has been determined by Crane to be

$$9.1(10^{-7})radians^2.$$

The total system MTF may similarly be approximated as:

$$MTF_t(s) = e^{-t\sigma2}$$

the total Gaussian width t is thus related to the system characteristics.

$$t=c/4^k+z(k)d/4+r+p\,N_k^2/N_p^2+8.2E\text{-}6\,N_k^2 \tag{Eq. 6}$$

Based on the preferred implementation, utilizing Gaussian functions, the following family of sharpening and blurring filters is provided. The digital filter 30 is generated using a mixture of fixed elements. Use the formula for sharpening when $\Delta A > 0$; and use the blurring formula for $\Delta A < 0$.
For sharpening use:

$$MTF_f(s)=1+\beta(1-e^{-gs^2}) \tag{Eq. 7}$$

where $\beta$ and g are free parameters. Our experience tells us that this is a good filter for $0 < \beta < 5$.
The digital filter 30 which corresponds to the MTF in Eq. 7 is

$$F = (1+\beta)\mathbf{I} - \beta K_g$$

$$(Eq.\ 8)$$

where I is the identity function and $K_g$ is the kernel corresponding to the value g. For blurring use:

$$MTF_f(s)=(1-\beta)e^{(-g1\,\cdot\,s^2)}+\beta e^{(-g2\,\cdot\,s^2)} \tag{Eq. 9}$$

where $\beta$, g1 and g2 are free parameters with

$$g2>g1 \text{ and } 0<\beta\le1 \tag{Eq. 10}$$

The digital filter 30 which corresponds to the MTF of Eq. 9 is

$$F=(1-\beta)K_{g1}+\beta K_{g2} \tag{Eq. 11}$$

where $K_{g1}$ is the kernel corresponding to g1 and $K_{g2}$ is the kernel corresponding to the value g2.

A set of g values is chosen and a table of these values is formed along with the digital filter kernel values corresponding to the g values and the acceptable limits of the parameter $\beta$. The g values are chosen so that a wide range of acutance changes can be achieved for all degrees of overall system sharpness t which will be encountered. The limits on the parameter $\beta$ are based on empirical knowledge of the effect of filters on digital images. The table is set forth below:

**EXAMPLE TABLE FOR BLURRING**

| g1 | g2 | beta min | beta max | kernel size g1 | kernel size g2 | | |
|---|---|---|---|---|---|---|---|
| 0.1 | 5 | 0 | 1 | 3 x 3 | 5 x 5 | | |
| | | | | | | | |
| **kernel** | | | | | | | |
| **for g1** | 0 | 0 | 0 | | | | |
| | 0 | 1 | 0 | | | | |
| | 0 | 0 | 0 | | | | |
| | | | | | | | |
| **kernel for g2** | 0.0003 | -0.0014 | -0.0141 | -0.0014 | 0.0003 | | |
| | -0.0014 | 0.0071 | 0.0731 | 0.0071 | -0.0014 | | |
| | -0.0141 | 0.0731 | 0.7456 | 0.0731 | -0.0141 | | |
| | -0.0014 | 0.0071 | 0.0731 | 0.0071 | -0.0014 | | |
| | 0.0003 | -0.0014 | -0.0141 | -0.0014 | 0.0003 | | |
| | | | | | | | |
| g1 | g2 | beta min | beta max | kernel size g1 | kernel size g2 | | |
| 5 | 50 | 0 | 1 | 5 x 5 | 7 x 7 | | |
| | | | | | | | |
| **kernel for g1** | 0.0003 | -0.0014 | -0.0141 | -0.0014 | 0.0003 | | |
| | -0.0014 | 0.0071 | 0.0731 | 0.0071 | -0.0014 | | |
| | -0.0141 | 0.0731 | 0.7456 | 0.0731 | -0.0141 | | |
| | -0.0014 | 0.0071 | 0.0731 | 0.0071 | -0.0014 | | |
| | 0.0003 | -0.0014 | -0.0141 | -0.0014 | 0.0003 | | |
| | | | | | | | |
| **kernel for g2** | 0.0018 | 0.005 | 0.009 | 0.0109 | 0.009 | 0.005 | 0.0018 |
| | 0.005 | 0.0133 | 0.024 | 0.0293 | 0.024 | 0.0133 | 0.005 |
| | 0.009 | 0.024 | 0.0434 | 0.0529 | 0.0434 | 0.024 | 0.009 |
| | 0.0109 | 0.0293 | 0.0529 | 0.0644 | 0.0529 | 0.0293 | 0.0109 |
| | 0.009 | 0.024 | 0.0434 | 0.0529 | 0.0434 | 0.024 | 0.009 |
| | 0.005 | 0.0133 | 0.024 | 0.0293 | 0.024 | 0.0133 | 0.005 |
| | 0.0018 | 0.005 | 0.009 | 0.0109 | 0.009 | 0.005 | 0.0018 |

| EXAMPLE TABLE FOR SHARPENING | | | | | | | |
|---|---|---|---|---|---|---|---|
| g value | beta min | beta max | filter size | | | | |
| 5 | 0 | 5 | 5 x 5 | | | | |
| | | | | | | | |
| kernel: | 0.0003 | -0.0014 | -0.0141 | -0.0014 | 0.0003 | | |
| | -0.0014 | 0.0071 | 0.0731 | 0.0071 | -0.0014 | | |
| | -0.0141 | 0.0731 | 0.7456 | 0.0731 | -0.0141 | | |
| | -0.0014 | 0.0071 | 0.0731 | 0.0071 | -0.0014 | | |
| | 0.0003 | -0.0014 | -0.0141 | -0.0014 | 0.0003 | | |
| | | | | | | | |
| g value | beta min | beta max | filter size | | | | |
| 20 | 0 | 5 | 5 x 5 | | | | |
| | | | | | | | |
| kernel | 0.003 | 0.0135 | 0.022 | 0.0135 | 0.003 | | |
| | 0.0135 | 0.06 | 0.0979 | 0.06 | 0.0135 | | |
| | 0.022 | 0.0979 | 0.1597 | 0.0979 | 0.022 | | |
| | 0.0135 | 0.06 | 0.0979 | 0.06 | 0.0135 | | |
| | 0.003 | 0.0135 | 0.022 | 0.0135 | 0.003 | | |
| | | | | | | | |
| g value | beta min | beta max | filter size | | | | |
| 50 | 0 | 5 | 7 x 7 | | | | |
| | | | | | | | |
| kernel | 0.0018 | 0.005 | 0.009 | 0.0109 | 0.009 | 0.005 | 0.0018 |
| | 0.005 | 0.0133 | 0.024 | 0.0293 | 0.024 | 0.0133 | 0.005 |
| | 0.009 | 0.024 | 0.0434 | 0.0529 | 0.0434 | 0.024 | 0.009 |
| | 0.0109 | 0.0293 | 0.0529 | 0.0644 | 0.0529 | 0.0293 | 0.0109 |
| | 0.009 | 0.024 | 0.0434 | 0.0529 | 0.0434 | 0.024 | 0.009 |
| | 0.005 | 0.0133 | 0.024 | 0.0293 | 0.024 | 0.0133 | 0.005 |
| | 0.0018 | 0.005 | 0.009 | 0.0109 | 0.009 | 0.005 | 0.0018 |

Given these filters the calculation of the integrals for $\Delta A$ can be done in closed form. Equation 12 defines the results for sharpening and Equation 13 defines the results for blurring.

$$\Delta A = B \cdot \log_{10}\left[(1+\beta)-\beta\sqrt{\frac{t}{t+g}}\right] \qquad \text{(Eq. 12)}$$

$$\Delta A = B \cdot \log_{10}\left[(1-\beta)\sqrt{\frac{t}{t+g1}}+\beta\sqrt{\frac{t}{t+g2}}\right] \qquad \text{(Eq. 13)}$$

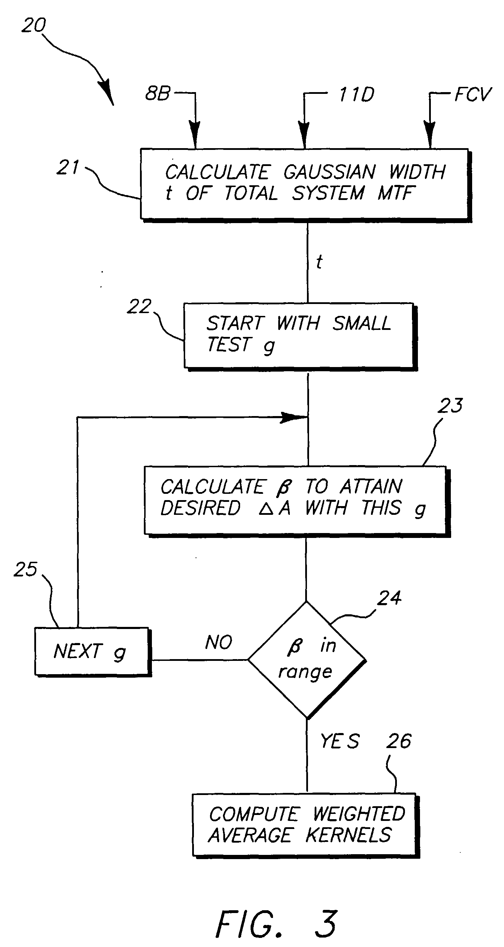

Fig. 3 illustrates the process flow 20 for forming the digital filter 30. In process block 21, the filter control value, FCV, other information 11D, and the additional data 8B, are operated upon to calculate the Gaussian width of the total system MTF. In process block 22 the table entry with the smallest g is selected. Process block 23 uses the value t and the

desired $\Delta A$ to calculate the $\beta$ value required for this g based on either Eq 12 or 13. In decision block 24 the value of $\beta$ is tested against the range of $\beta$ values stored in the table. If the value of $\beta$ is within the range the process proceeds to block 26. If the value of $\beta$ is not within the range then the next g value is selected from the table by process block 25 and the corresponding $\beta$ value is again tested for acceptability. Within block 26 the digital filter 30 is formed by appropriate weighting of the kernels stored in the table and outputted as the digital filter 30 in Fig. 2.

As an example, consider production of a 4 inch high print on a 300 dpi printer. The image is a hierarchical file starting with 4096 by 6144 pixels, going down by factors of two.

$N_p$ is 1200; $N_o$ is 4096; assume that c=7, d=10, p=10, r=0. Then:

for the 4k image, k=0:
$t=7+0+10(4096/1200)^2+8.2E\text{-}6(4096)^2=260$;

for the 2k image, k=1:
$t=2+2+10(2048/1200)^2+8.2E\text{-}6(2048)^2=68$;

for the 1k image, k=2:
$t=0+2+10(1024/1200)^2+8.2E\text{-}6(1024)^2=18$; and

for the 512 pixel image, k=3:
$t=0+2+10(512/1200)^2+8.2E\text{-}6(512)^2=6$.

## Background for Forming Digital Filters

The frequency content of digital images can be affected by convolving the image with an appropriate kernel in the spatial domain. This could also be accomplished by multiplying the Fourier transform of the digital image with the desired frequency response in the spatial frequency domain. The advantage of the former technique over the latter is the elimination of the need to Fourier transform potentially large images and inverse transform them after the multiplication, thus saving compute time and memory. When FIR (finite impulse response) filters are designed to enhance or degrade the apparent sharpness of digital images, they are *usually* designed with monotonic frequency response curves. It is also customary to normalize the kernels to ensure that the DC term corresponding to a spatial frequency of zero has unity response, thereby preventing the kernel from affecting the overall amplitude of the image. The frequency response of a filter designed to enhance or boost perceived sharpness is greater than unity at spatial frequencies greater than zero and $\leq 0.5$ cycles/sample. The frequency response of a filter designed to degrade or blur perceived sharpness is less than unity at spatial frequencies greater than zero and $\leq 0.5$ cycles/sample. The frequency corresponding to 0.5 cycles/sample represents the highest spatial frequency that can be sampled for a given system and the equivalent frequency in units of cycles/mm is dependent upon the sampling resolution of that system.

### Use of the Convolution Theorem

Since it is desirable to filter in the spatial domain for the reasons stated above, the convolution theorem is of special importance. If an image denoted as f(x,y) is convolved with a filter denoted as h(x,y), and the resulting modified image is denoted as g(x,y), this function can be stated as:

$$g(x,y) = h(x,y) \otimes f(x,y)$$

If the Fourier transforms of f(x,y), h(x,y) and g(x,y) are denoted as F(u,v), H(u,v) and G(u,v) respectively, where x and y represent the horizontal and vertical spatial dimensions and u and v represent the horizontal and vertical frequency dimensions, then the convolution theorem yields the relationship:

$$G(u,v) = H(u,v)F(u,v)$$

Therefore, the modified image can be obtained via convolution in the spatial domain or via multiplication in the frequency domain, and the following Fourier pair is defined:

$$h(x,y) \otimes f(x,y) \Leftrightarrow H(u,v)F(u,v)$$

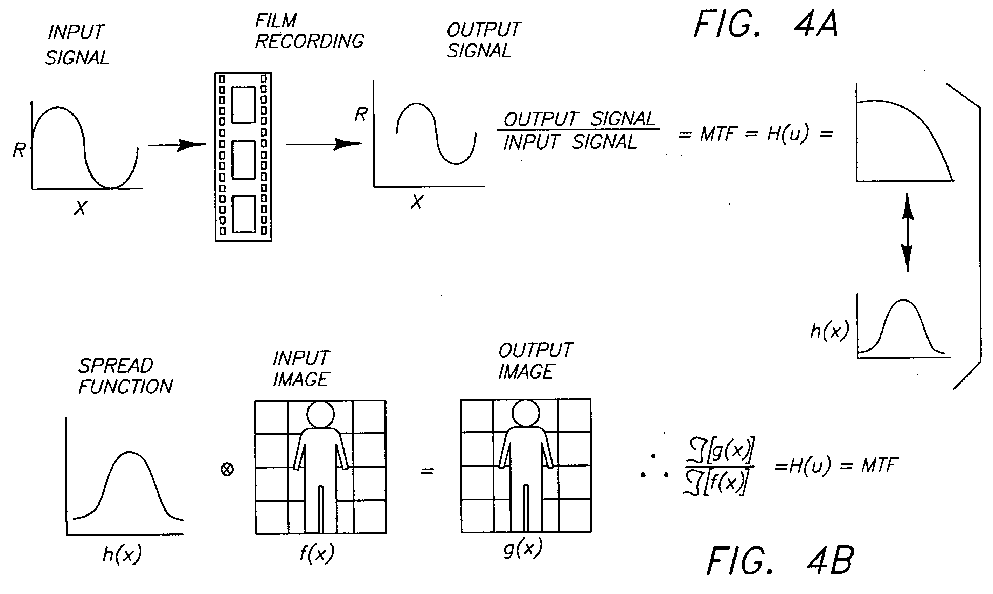

In digital imaging applications, the transform H(u,v) is referred to as the *transfer function* of the process. Its magnitude is referred to as the *modulation transfer function*, or *MTF*, and defines the amount of response at different frequencies. In the context of imaging, the MTF or frequency response curve indicates the amount of signal present after processing relative to the amount of signal present prior to processing. Film MTF, simply put, is measured by comparing the signal that was exposed onto the film to the signal subsequently recorded by the film as represented pictorially in Fig. 4A. In the example, "processing" refers to the physics behind latent image formation in silver halides and the chemical processing used to "develop" the recorded image. The Fourier transform of the MTF, H(u,v), yields the function h(x,y) which is referred to as the *point spread function*. When a convolution kernel that represents the point spread function is convolved with a digital image, the frequency content of the original image is altered in a manner defined by the Fourier transform of the kernel - its frequency response or MTF. In this example, the "processing" that was mentioned in the above definition of MTF refers to the process of convolving the digital image with the digital convolution kernel. In this case, as in the film MTF case, MTF is defined as the frequency response that results from taking the ratio of the output signal to the original signal.

**Solving for the Kernel Coefficients**

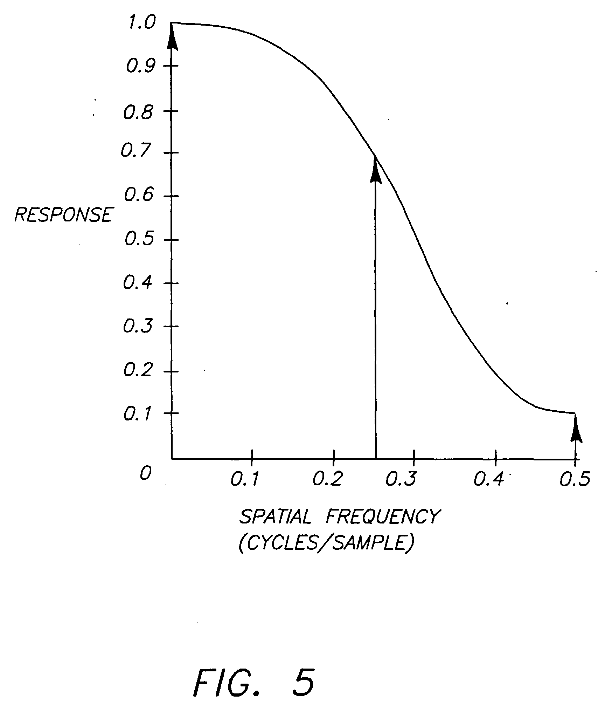

The task at hand is to determine a convolution kernel from an aim frequency response function. When convolved with a digital image, this kernel will affect the image's frequency content by enhancing or degrading sharpness according to the frequency response function or MTF. Once the aim frequency response function has been defined, its Fourier transform is used to solve for a kernel of coefficients. Such a frequency response curve may look like the curve of Fig. 5.

The arrows in Fig. 5 represent three data points in the aim frequency response corresponding to (0.00,1.0), (0.25,0.7), and (0.50,0.1). The curve connecting these points represents a spline-fit of the data points. There exists a kernel of coefficients:

$$h(x)=[CBABC]$$

which, when convolved with an image, will change the image's frequency content according to the curve shown in Fig. 4A. In order to determine values for the coefficients A, B, and C, the discrete Fourier transform of the kernel must be determined. In order to simplify the mathematics, only the one-dimensional horizontal frequency axis will be considered. The discrete Fourier transform is determined according to the equation:

$$H(u)=\sum_{N}^{N-1} h(x)e^{-i2\pi ux}$$

$$H(u)=H(-u) \qquad (|u|\leq 0.5)$$

For an even transfer function, that is:
the general form of the discrete Fourier transform of h(x) becomes:

$$H(u)=A+2B\cos(2\pi u)+2C\cos(4\pi u)$$

and so on for larger kernels. The number of points defined in the aim frequency response will determine the size of the kernel. In this example, three data points were defined so the kernel will have three unique elements and the kernel size will be 1x5 with symmetry about the center. Denoting each of the frequencies in the frequency response aim as $u_0$, $u_1$, and $u_s$, and the responses at each of those frequencies as $R_0$, $R_1$, and $R_2$, matrix inversion can be used to solve for the kernel coefficients A, B, and C in the following equation:

$$\begin{bmatrix} R_0 \\ R_1 \\ R_2 \end{bmatrix} = \begin{bmatrix} 1 & 2\cos(2\pi u_0) & 2\cos(4\pi u_0) \\ 1 & 2\cos(2\pi u_1) & 2\cos(4\pi u_1) \\ 1 & 2\cos(2\pi u_2) & 2\cos(4\pi u_2) \end{bmatrix} \begin{bmatrix} A \\ B \\ C \end{bmatrix}$$

using matrix inversion. Using the frequency response data in Fig. 5, the convolution kernel is found to be:

$$[-0.0375 \ 0.2250 \ 0.6250 \ 0.2250 \ -0.0375]$$

The coefficients sum to unity so the overall contrast of the image will not be changed. In this general form, the kernel size is dependent upon the number of data points in the frequency response curve. When it is desirable to have kernel sizes independent from the number of points in the frequency response aim, it is common to interpolate between given frequency response data points and solve for the kernel of desired size using least squares techniques.

The invention has been described with reference to a preferred embodiment. However, it will be appreciated that variations and modifications can be effected by a person of ordinary skill in the art without departing from the scope of the invention.

**Parts List:**

| | |
|---|---|
| 8 | digital image data |
| 8A | image data segment |
| 8B | additional data |
| 10 | central processing unit (CPU) |
| 11 | system application software |
| 11D | other information |
| 12 | monitor |
| 13 | buffer |
| 14 | keyboard |
| 16 | modified digital image file |
| 18 | printer |
| 20 | process |
| 21 | process block |
| 22 | process block |
| 23 | process block |
| 24 | decision block |
| 25 | process block |
| 26 | process block |
| 27 | remote sites |
| 30 | digital filter |
| 40 | operation |

**Claims**

1. A method for forming a digital sharpening/blurring filter, for use in an image processing work station, incorporating MTF functions derived from the image processing chain, comprising the steps of:

    a) enabling an image processing work station operator to select a filter control value from a plurality of filter control values that relate to human sharpness perception values;
    b) estimating the MTF function of the image processing chain; and
    c) forming a digital sharpening/blurring filter, which when introduced into the image processing chain, changes the overall MTF function in accordance with the selected filter control value so as to implement the operator selected change in sharpness.

2. The method according to Claim 1 wherein the filter control values represent changes in acutance.

3. The method according to Claim 1 wherein the filter control values represent changes in AMT acutance.

4. The method according to Claim 1 wherein the digital sharpening/blurring filter is formed with the steps of:

    i) providing a precalculated set of kernels;
    ii) selecting a kernel from the set of kernels and calculating a scaling value which provides the operator selected change in sharpness; and
    iii) combining the kernel and the scaling value to form the digital sharpening/blurring filter.

5. The method according to Claim 1 wherein the digital sharpening/blurring filter is formed with the steps of:

    i) providing a precalculated set of kernels;
    ii) selecting two kernels from the set of kernels and calculating a relative weighting value for each of the kernels which provides the operator selected change in sharpness; and
    iii) combining the kernels and the weighting values to form the digital sharpening/blurring filter.

6. The method according to Claim 4 wherein the kernels are selected to have a Gaussian response.

7. The method according to Claim 5 wherein the kernels are selected to have a Gaussian response.

8. A method for forming a digital sharpening/blurring filter, for use in an image processing work station, incorporating MTF functions derived from the image processing chain which work station processes digital images having a multilevel resolution structure, comprising the steps of:

   a) enabling an image processing work station operator to select a filter control value from a plurality of filter control values that represent human sharpness perception values;
   b) estimating the MTF function of the image processing chain; and
   c) forming a digital sharpening/blurring filter for a specific resolution level of the digital image, which when introduced into the image processing chain, changes the overall MTF function in accordance with the selected filter control value so as to implement the operator selected change in sharpness.

9. A method for forming a digital sharpening/blurring filter, for use in image processing work stations, incorporating MTF functions derived from the image processing chain, comprising the steps of:

   a) enabling an operator at a first image processing work station to select a filter control value from a plurality of filter control values that represent human sharpness perception values;
   b) estimating the MTF function of the image processing chain; and
   c) forming a digital sharpening/blurring filter at a second image processing work station, which when introduced into the image processing chain, changes the overall MTF function in accordance with the selected filter control value so as to implement the operator selected change in sharpness.

10. A method for forming a digital sharpening/blurring filter, for use in an image processing work station, incorporating MTF functions derived from the image processing chain, comprising the steps of:

    a) selecting a filter control value from a plurality of filter control values that relate to human sharpness perception values;
    b) estimating the MTF function of the image processing chain; and
    c) forming a digital sharpening/blurring filter, which when introduced into the image processing chain, changes the overall MTF function in accordance with the selected filter control value so as to implement the selected change in sharpness.

FIG. 1

FIG. 2

FIG. 3

**FIG. 4A**

INPUT SIGNAL

FILM RECORDING

OUTPUT SIGNAL

$$\frac{OUTPUT\ SIGNAL}{INPUT\ SIGNAL} = MTF = H(u) =$$

$h(x)$

**FIG. 4B**

SPREAD FUNCTION

$h(x)$

$\otimes$

INPUT IMAGE

$f(x)$

$=$

OUTPUT IMAGE

$g(x)$

$$\therefore \frac{\Im[g(x)]}{\Im[f(x)]} = H(u) = MTF$$

FIG. 5